# EUROPÄISCHE PATENTSCHRIFT

(11) **EP 1 267 113 B1**
(45) Veröffentlichungstag und Bekanntmachung des Hinweises auf die Patenterteilung: **05.02.2003**
(21) Anmeldenummer: 01116076.9
(22) Anmeldetag: 03.07.2001
(51) Int. Cl.: F16L 13/14, F16L 33/26

(54) **Anschlusselement**
Connection member
Elément de raccordement

(43) Veröffentlichungstag der Anmeldung: 18.12.2002
(73) Patentinhaber: Polypress Rohrsysteme GmbH, 46485 Wesel (DE)
(72) Erfinder: Gardemann, Udo, 46485 Wiesel (DE)
(74) Vertreter: Szynka, Dirk

(56) Entgegenhaltungen:
- DE-A- 19 845 720
- DE-C- 4 304 680

## Beschreibung

Die Erfindung betrifft ein Anschlußelement für ein Leitungssystem, das mit mindestens einem Rohr des Leitungssystems, wie etwa einem Kunststoff-Metall-Kunststoff-Verbundrohr koppelbar ist, mit mindestens einer eine Einführöffnung für das Rohr begrenzenden und zum Aufnehmen eines Rohrendes dienenden Preßhülse.

Derartige Anschlußelemente sind beispielsweise aus der EP 0 713 042 A1 bekannt. Bei den in dieser Schrift beschriebenen Anschlußelementen wird das Verbundrohr in einen zwischen der Preßhülse und einem als kreiszylindermantelförmige Stützhülse verwirklichten Anschlußbereich gebildeten Ringspalt eingeschoben. Dann wird die Preßhülse radial verformt und drängt dabei das Material des Verbundrohres in in Umfangsrichtung der Stützhülse verlaufende Profilierungen, um so eine gegen axiale Verschiebungen gesicherte Verbindung zwischen dem Anschlußelement und dem Verbundrohr zu erhalten. Bei dem bekannten Anschlußelement wird die Einschubtiefe des Verbundrohres in die Preßhülse bzw. den zwischen der Preßhülse und der Stützhülse gebildeten Ringspalt mit Hilfe eines die Stützhülse umlaufenden Bundes begrenzt. Zur Sicherung einer optimalen Verbindung zwischen dem Anschlußelement und dem Verbundrohr weist der Bund des bekannten Anschlußelementes an seinem Außenumfang mindestens eine Ausnehmung und/oder einen durchsichtigen Bereich auf, die bzw. der an dem den Anschlußbereich zugeordneten Randbereich des Bundes vorgesehen ist, so daß die Lage eines in den zwischen Stützhülse und Preßhülse gebildeten Ringspalt eingeschobenen Rohrendes überprüfbar ist.

Wenngleich mit derartigen Anschlußelementen eine vergleichsweise sichere Festlegung des Verbundrohres erreichbar ist, hat es sich beim Einsatz entsprechender Leitungssysteme, insbesondere dann wenn ein Fluid mit hohen Temperatur- und Druckschwankungen darin geführt wird, gezeigt, daß es häufig zu undichten Stellen im Bereich der Anschlußelemente kommt. Zur Lösung dieses Problems sind bereits Anschlußelemente mit mindestens zwei die Stützhülse umlaufenden Dichtringen vorgeschlagen worden, von denen der eine zusammen mit der Preßhülse verpreßt wird, während der andere unverpreßt bleibt. Bei diesen Anschlußelementen stellt der verpreßte Dichtring eine dichte Verbindung bei geringen Temperaturen und Drucken sicher, während der unverpreßte Dichtring eine ausreichende Dichtung bei hohen Temperaturen und Drucken gewährleistet. Ferner wurden bereits Anschlußelemente vorgeschlagen, bei denen die gewünschte formschlüssige Verbindung zwischen Verbundrohr und Anschlußelement mit Hilfe eines Führungselementes für die zur Ausführung des Preßvorganges benutzte Preßzange sichergestellt wird. Dieses Führungselement kann beispielsweise in Form eines umlaufenden Steges an einem die Preßhülse mit dem Bund verbindenden Kunststoffring verwirklicht sein, wobei dieser Kunststoffring auch noch transparent ausgeführt sein kann, um so eine Überprüfung der Position des in den zwischen Preßhülse und Stützhülse gebildeten Ringspalt eingeführten Verbundrohres zu ermöglichen.

Ferner wurden zur Erhöhung der Dichtigkeit von Verbindungen zwischen Anschlußelementen der eingangs beschriebenen Art und Verbundrohren auch schon verschiedene Maßnahmen vorgeschlagen, um einen korrosionsfördernden galvanischen Kontakt zwischen der Metalleinlage des Verbundrohres und dem einen Anschlag für das Verbundrohr bildenden Bund zu verhindern. In diesem Sinne wird beispielsweise in der DE 198 45 720 A1 ein Anschlußelement mit einem Bund vorgeschlagen, der zumindest im Bereich einer Anlagefläche, an der eine Stirnfläche des Verbundrohres in Anlage an den Bund gelangt, aus einem elektrisch isolierenden Material gebildet ist.

Wenngleich die Ergreifung der geschilderten Maßnahmen zu einer beachtlichen Erhöhung der Betriebszuverlässigkeit von Leitungssystemen der beispielsweise in der EP 0 713 042 A1 beschriebenen Art geführt hat, werden trotzdem noch in einigen Fällen undichte Stellen im Bereich der Anschlußelemente dieser Leitungssysteme beobachtet. Ein Anschlußelement nach dem Oberbegriff des Anspruchs 1 ist bekannt aus der DE 4 304 680 C1.

Angesichts der vorstehend erläuterten Probleme im Stand der Technik liegt der Erfindung die Aufgabe zugrunde, ein Anschlußelement für ein Leitungssystem der eingangs beschriebenen Art bereitzustellen, welches in einfacher Weise eine weitere Erhöhung der Betriebszuverlässigkeit von damit hergestellten Leitungssystemen erlaubt.

Erfindungsgemäß wird diese Aufgabe durch eine Weiterbildung der bekannten Anschlußelemente nach Anspruch 1 gelöst.

Diese Erfindung geht auf die verblüffend einfache Erkenntnis zurück, daß die trotz der vorstehend geschilderten Maßnahmen immer noch beobachteten undichten Stellen im Bereich der Anschlußelemente in erster Linie durch während der Montage des Leitungssystems in die Preßhülse eindringende und die Wirkung von Dichtelementen o. dgl. beeinträchtigende Schmutzpartikel hervorgerufen werden. Wenn nun das Eindringen von Schmutz mit einem entsprechenden Schutzelement verhindert wird, kommt es auch nicht zu durch derartige Schmutzpartikel hervorgerufene undichte Stellen im Bereich der Anschlußelemente, so daß insgesamt ein Leitungssystem mit erhöhter Betriebszuverlässigkeit zur Verfügung gestellt werden kann.

Im Hinblick auf den Erhalt einer besonders einfachen Montage von Leitungssystemen unter Verwendung erfindungsgemäßer Anschlußelemente unter gleichzeitiger Sicherstellung einer besonders dichten Verbindung ist dabei zumindest ein Einführabschnitt des Schutzelementes zusammen mit dem Rohrende in die Preßhülsen einführbar. Bei Einsatz eines derartigen Anschlußelementes kann das Rohr des Leitungssystems ohne vorheriges Entfernen des Schutzelementes von der Preßhülse montiert werden, um so ohne zusätzlichen Arbeitsschritt eine besonders dichte Verbindung bereitzustellen, wobei auf diese Weise auch noch der zusätzliche Vorteil erreicht wird, daß das ansonsten zu besorgende Eindringen von Schmutzpartikeln in die Preßhülse im Zusammenhang mit der Entfernung des Schutzelementes verhindert wird. Schließlich kann bei der zuletzt beschriebenen Ausführungsform der Erfindung mit Hilfe des zusammen mit dem Rohrende in die Preßhülse eingeführten Einführabschnittes des Schutzelementes auch noch ein korrosionsfördernder galvanischer Kontakt zwischen der Metalleinlage eines Verbundrohres des Leitungssystems und einem ggf. vorhandenen, die Einschubtiefe des Rohres in die Preßhülse begrenzenden Anschlag verhindert werden.

Falls das Schutzelement einen zusammen mit dem Rohrende in die Preßhülse einführbaren Einführabschnitt aufweist, hat es sich als besonders günstig erwiesen, wenn das Schutzelement auch noch mindestens einen im Bereich der Einführöffnung gehaltenen Halteabschnitt umfaßt, mit dem der Einführabschnitt vor Montage des Leitungssystems zuverlässig im Bereich der Einführöffnung gehalten werden kann, um so in jedem Fall das Eindringen von Schmutz in die Preßhülse vor Einführung des Rohrendes zu verhindern. Dazu ist der Einführabschnitt zweckmäßigerweise lösbar an dem Befestigungsabschnitt festgelegt, wobei Einführabschnitt und Halteabschnitt herstellungstechnisch besonders einfach einstückig hergestellt werden können, wenn der Einführabschnitt über eine beispielsweise in Form von Materialbrücken gebildete Sollbruchstellen an dem Befestigungsabschnitt gehalten ist. Der Halteabschnitt weist zweckmäßigerweise eine umlaufende Nut auf, in der ein Rand der Preßhülse aufgenommen werden kann.

Im Rahmen dieser Erfindung weist das Anschlußelement zum Erhalt einer besonders sicheren Verbindung unter gleichzeitiger Gewährleistung einer einfachen Montage auch noch mindestens einen vorzugsweise etwa kreiszylindermantelförmigen und besonders bevorzugt einstückig mit einem die Einschubtiefe des Rohres in die Preßhülse begrenzenden Anschlag gebildeten Anschlußbereich, wie etwa eine Stützhülse, auf, auf den das Rohr aufschiebbar ist, wobei die Preßhülse zweckmäßigerweise lösbar an dem Anschlag festlegbar ist, um so einen zur Aufnahme des Rohrendes dienenden Ringspalt zwischen der Stützhülse und der Preßhülse zu bilden. Daher kann das Schutzelement einen in die Einführöffnung einlegbaren Kunststoffring aufweisen. Wie eingangs bereits erläutert ist es zum Erhalt einer sicheren Verbindung zwischen dem Anschlußelement und dem Rohr besonders wichtig, die Lage des in die Preßhülse eingeführten Rohres zu überprüfen, bevor der Preßvorgang durchgeführt wird. Dazu wird bei den aus dem Stand der Technik bekannten Anschlußelementen ein Verbindungselement in Form eines transparenten oder mit Durchbrüchen versehenen Kunststoffringes zwischen dem die Stützhülse umlaufenden Bund und der Preßhülse eingesetzt, um so die korrekte Anlage der Stirnfläche des Rohres an dem Bund überprüfen zu können. Bei erfindungsgemäßen Anschlußelementen ist eine zuverlässige Lagekontrolle mit Hilfe eines derartigen Verbindungselementes aber nicht möglich, weil nicht die Stirnfläche des Rohres, sondern der Einführabschnitt des Schutzelementes in Anlage an den die Stützhülse umlaufenden Bund gelangt, so daß eine Überprüfung der Lage des in die Preßhülse eingeführten Rohres mit Hilfe eines aus dem Stand der Technik bekannten Verbindungselementes nicht möglich ist. Angesichts dieses Problems ist bei einer besonders bevorzugten Ausführungsform der Erfindung vorgesehen, daß die Preßhülse selbst ein Kontrollelement, wie etwa eine Kontrollöffnung zum Prüfen der Position des darin aufgenommenen Rohrendes aufweist, wobei dieses Kontrollelement zweckmäßigerweise außerhalb des ggf. noch vorhandenen Verbindungselements angeordnet ist. Wenngleich ein derartiges, an der Preßhülse selbst vorgesehenes Kontrollelement nur eine mittelbare Überprüfung der korrekten Lage des in der Preßhülse aufgenommenen Rohrendes bezüglich dem umlaufenden Anschlag ermöglicht, hat es sich gezeigt, daß diese mittelbare Kontrolle ausreicht, um eine zuverlässige Verbindung sicherzustellen.

Zweckmäßigerweise umfaßt die Preßhülse eine Mehrzahl von in ihrer Umfangsrichtung voneinander beabstandeten Kontrollöffnungen, um so eine Lagekontrolle auch bei ungünstigen Montagebedingungen zu ermöglichen.

Zusätzlich oder alternativ kann das erfindungsgemäße Anschlußelement auch noch ein einerseits am Anschlag und andererseits an der Preßhülse festlegbares Verbindungselement aufweisen, das vorzugsweise zumindest teilweise aus einem transparenten Material besteht. Ein derartiges Verbindungselement kann besonders zuverlässig am Anschlagelement festgelegt werden, wenn es einen radial nach innen ragenden, vorzugsweise umlaufenden Steg aufweist, der in einer vorzugsweise umlaufenden Nut des Anschlußelementes aufgenommen ist.

Das erfindungsgemäße Anschlußelement kann beispielsweise in Form eines T-Stückes mit insgesamt drei Anschlußbereichen und drei diesen zugeordneten Anschlägen gebildet sein.

Nachstehend wird die Erfindung unter Bezugnahme auf die Zeichnung, auf die hinsichtlich aller erfindungswesentlichen und in der Zeichnung nicht näher herausgestellten Einzelheiten ausdrücklich verwiesen wird, erläutert. Die einzige Figur der Zeichnung zeigt die Montage eines Verbundrohres an einem erfindungsgemäßen Anschlußelement.

Das in der Zeichnung dargestellte Anschlußelement umfaßt im wesentlichen eine etwa kreiszylindermantelförmige Stützhülse 12, einen die Stützhülse 12 umlaufenden Anschlag 20, einen lösbar an dem Anschlag 20 festgelegten Kunststoffring 30 und eine lösbar an dem Kunststoffring 30 gehaltene Preßhülse 40. Die Stützhülse 12 ist mit zwei in axialem Abstand voneinander die Zylinderachse umlaufenden Nuten 14 versehen, in die O-Ringe 16 eingelegt sind. Der dem dem Anschlag 20 abgewandten Ende benachbarte Bereich der Außenfläche der Stützhülse 12 ist mit einer Profilierung in Form von Nuten 18 mit dreieckförmigem Querschnitt versehen. Eine ähnliche Profilierung ist auch zwischen der dem Anschlag 20 benachbarten Nut 14 und dem Anschlag 20 selbst vorgesehen. Durch die Form der Nuten 18 kann eine axiale Verschiebung eines in den Raum zwischen der Preßhülse 40 und der Stützhülse 12 eingeschobenen Verbundrohres 50 in einer der durch den Pfeil 60 angegebenen Einschubrichtung entgegengesetzten Richtung zuverlässig verhindert werden. Der Anschlag 20 weist eine umlaufende Nut 28 auf. In diese Nut 28 ist ein radial nach innen ragender Steg 32 des Kunststoffrings 30 aufgenommen. An seinem dem radial nach innen ragenden Steg 32 entgegengesetzten Ende ist der Kunststoffring 30 mit einem radial nach außen ragenden, umlaufenden Steg 34 versehen. Der radial nach außen ragende Steg 34 weist auf seiner dem Anschlußbereich 10 zugewandten Seite eine umlaufende Nut 36 auf. Zwischen dem radial nach innen ragenden Steg 32 und dem radial nach außen ragenden Steg 34 ist der Kunststoffring 30 mit einem Bereich 30 geringer Wandstärke versehen.

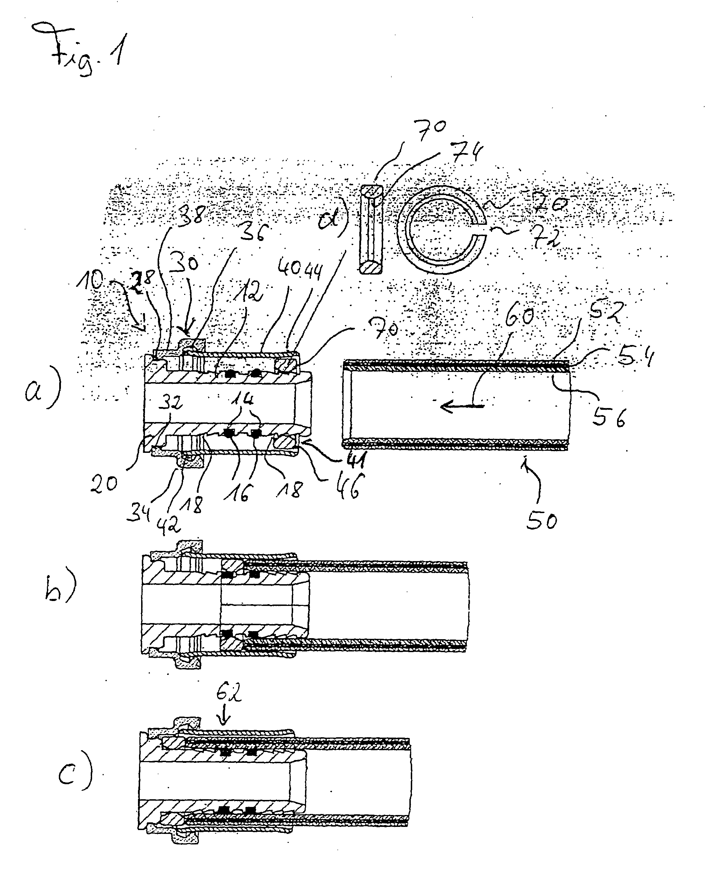

In die Nut 36 des Kunststoffrings 30 ist ein radial erweiterter Bereich 42 der im übrigen im wesentlichen kreiszylindermantelförmigen Preßhülse aufgenommen. An ihrem dem radial erweiterten Bereich 42 entgegengesetzten Ende ist die Preßhülse 40 mit einem radial nach außen abgebogenen Endbereich 44 versehen. Die Stützhülse 12, der Anschlag 20, der Kunststoffring 30 und die Preßhülse 40 bilden ein Bauelement, bei dem die Preßhülse 40 über den Kunststoffring 30 am Anschlag 20 gehalten ist, wobei zwischen der Preßhülse 40 und der Außenfläche der Stützhülse 12 ein Ringspalt 46 gebildet wird. Dieser Ringspalt 46 weist eine Einführöffnung 41 zum Einschieben eines Metall-Kunststoff-Verbundrohres in der durch den Pfeil 60 bezeichneten Richtung auf. Dabei umfaßt das Verbundrohr 50 zwei koaxial zur Rohrachse verlaufende Kunststoffschichten 52 und 56, zwischen denen eine Metallarmierung 54 angeordnet ist. Die Metallarmierung 54 kann beispielsweise in Form eines in eine der Kunststoffschichten 52 und 56 eingebetteten Metallgewebes vorliegen. Im Bereich der Einführöffnung 41 ist ein Schutzelement in Form eines Kunststoffrings 70 eingelegt. Wie besonders deutlich aus Fig. 1d) hervorgeht ist der Kunststoffring 70 in Form eines Sprengringes mit einer ihn in Umfangsrichtung unterbrechenden Öffnung 72 und einer balligen Innenfläche 74 ausgeführt. Die Ausführung des Kunststoffrings 70 als Sprengring erlaubt den Ausgleich von Durchmessertoleranzen der Stützhülse 12 bzw. den Einsatz ein und desselben Kunststoffrings 70 für Stützhülsen unterschiedlicher Durchmesser. Durch die ballige Innenfläche 74 wird erreicht, daß der Kunststoffring 70 beim Einführen des Rohres 50 in der durch den Pfeil 60 bezeichneten Richtung störungsfrei über die profilierte Außenfläche der Stützhülse 12 gleitet. In der in Fig. 1a) dargestellten Ausgangsstellung befindet sich der Kunststoffring 70 in unmittelbarer Nähe zur Einführöffnung 41 und wirkt in dieser Lage dem Eindringen von Schmutzteilchen in den zwischen der Stützhülse 12 und der Preßhülse 40 gebildeten Ringspalt 46 entgegen. Beim Einführen des Verbundrohres 60 in den Ringspalt 46 wird der Kunststoffring 70 mitgeführt, wie in Fig. 1b) dargestellt. Beim Erreichen seiner axialen Endlage liegt der Kunststoffring 70 an dem Anschlag 20 an. In dieser Lage verhindert der Kunststoffring 70 einen direkten Kontakt zwischen der Metalleinlage 54 des Verbundrohres 50 und dem Anschlag 20, wie besonders deutlich in Fig. 1c) erkennbar ist. Zur Überprüfung der Lage des in den Ringspalt 46 eingeschobenen Verbundrohres 50 weist die Preßhülse 40 außerhalb des Kunststoffrings 30 eine Anzahl von in Umfangsrichtung voneinander beabstandeten Kontrollöffnungen auf, die eine visuelle Lagekontrolle des Verbundrohres erlauben. Zusätzlich kann die gewünschte galvanische Trennung zwischen dem Anschlag 20 und der Metallarmierung 54 durch den Bereich 38 des Kunststoffrings 30 überprüft werden.

Zur Befestigung des in den Ringspalt 46 eingeschobenen Verbundrohres 50 wird die Preßhülse 40 zusammen mit dem Verbundrohr 50 mit einem in der Zeichnung nicht dargestellten Preßwerkzeug in der durch den Pfeil 62 angedeuteten Richtung radial nach innen verpreßt. Während des Preßvorgangs wird ein Teil der Kunststoffschicht 52 des Verbundrohres 50 in die umlaufenden Nuten 18 der Stützhülse 12 gedrängt. Dadurch wird eine axiale Verschiebung des Verbundrohres 50 in dem Ringspalt 46 zuverlässig verhindert. Mit dem radial nach außen ragenden umlaufenden Steg 34 des Kunststoffrings 30 kann das Preßwerkzeug während des Preßvorgangs zwischen dem Kunststoffring und dem radial nach außen abgebogenen Bereich 44 lagerichtig geführt werden.

Die Erfindung ist nicht auf die anhand der Zeichnung dargestellten Ausführungsformen beschränkt. Beispielsweise ist auch an eine zweiteilige Ausführung des Schutzrings 70 mit einem Einführabschnitt und einem Halteabschnitt gedacht, wobei der Halteabschnitt eine umlaufende Nut aufweist, in die der nach außen abgebogene Endbereich 44 der Preßhülse 40 eingeführt ist. Der Einführabschnitt kann über Materialbrücken o. dgl. lösbar an dem Halteabschnitt befestigt sein, um ihn unabhängig von dem Halteabschnitt zusammen mit dem Verbundrohr 50 in den Ringspalt 46 hineinschieben zu können. Ferner ist auch an Ausführungsformen gedacht, bei denen das als Kunststoffring 30 ausgeführte Verbindungselement zwischen dem Anschlag 20 und der Preßhülse 40 einstückig mit dem Anschlag 20 ausgeführt ist. Schließlich sind auch noch solche Ausführungsformen denkbar, bei denen der Kunststoffring 30 Ausnehmungen bzw. Durchbrüche aufweist, die eine Überprüfung der gewünschten galvanischen Trennung zwischen der Metalleinlage 54 und dem Anschlag 20 ermöglichen.

## Patentansprüche

1. Anschlußelement für ein Leitungssystem, das mit mindestens einem Rohr (50) des Leitungssystems koppelbar ist, mit mindestens einer eine Einführöffnung (41) für das Rohr (50) begrenzenden und zum Aufnehmen eines Rohrendes dienenden Preßhülse (40), einem Anschlußbereich (12), auf den das Rohrende aufschiebbar ist, und mindestens einem dem Eindringen von Schmutz in die Einführöffnung (41) entgegenwirkenden Schutzelement (70), **dadurch gekennzeichnet, daß** zumindest ein Einführabschnitt des Schutzelementes (70) zusammen mit dem Rohrende in die Presshülse (40) einführbar ist.

2. Anschlußelement nach Anspruch 1, **dadurch gekennzeichnet, daß** das Schutzelement (70) in die Einführöffnung (41) eingelegt ist.

3. Anschlußelement nach Anspruch 2, **dadurch gekennzeichnet, daß** das Schutzelement mit mindestens einem Halteabschnitt im Bereich der Einführöffnung gehalten ist.

4. Anschlußelement nach den Ansprüchen 2 und 3, **dadurch gekennzeichnet, daß** der Einführabschnitt lösbar an dem Befestigungsabschnitt festgelegt ist, insbesondere mit Hilfe von Sollbruchstellen bildenden Materialbrücken.

5. Anschlußelement nach einem der vorhergehenden Ansprüche, **gekennzeichnet durch** einen die Einschubtiefe des Rohrs (50) in die Preßhülse (40) begrenzenden Anschlag (20).

6. Anschlußelement nach einem der vorhergehenden Ansprüche, **dadurch gekennzeichnet, daß** der Anschlußbereich (12) etwa kreiszylindermantelförmig und vorzugsweise einstückig mit dem Anschlag (20) gebildet ist.

7. Anschlußelement nach Anspruch 5 oder 6, **dadurch gekennzeichnet, daß** die Preßhülse (40) lösbar an dem Anschlag (20) festlegbar ist.

8. Anschlußelement nach den Ansprüchen 6 und 7, **dadurch gekennzeichnete, daß** die Einführöffnung (41) in Form eines Ringspaltes (46) zwischen dem Anschlußbereich (12) und der lösbar an dem Anschlage (20) festgelegten Preßhülse gebildet ist.

9. Anschlußelement nach Anspruch 8, **dadurch gekennzeichnet, daß** das Schutzelement (70) einen in die Einführöffnung einlegbaren Kunststoffring aufweist.

10. Anschlußelement nach einem der vorhergehenden Ansprüche, **dadurch gekennzeichnet, daß** die Preßhülse mindestens ein Kontrollelement, wie etwa eine Kontrollöffnung zum Prüfen der Position des darin aufgenommenen Rohrendes aufweist.

11. Anschlußelement nach einem der Ansprüche 6 bis 10, **gekennzeichnet durch** ein einerseits am Anschlag (20) und andererseits an der Preßhülse (40) festlegbares Verbindungselement (30), das vorzugsweise zumindest teilweise aus einem transparenten Material besteht.

## Claims

1. Connection element for a pipe system that can be coupled with at least one pipe (50) of the pipe system, comprising at least one press sleeve (40) that delimits a lead-in opening (41) for the pipe (50) and serves to receive one end of the pipe, a connecting region (12) onto which the pipe end can be slid, and at least one protection element (70) that opposes the penetration of dirt into the lead-in opening (41), **characterized in that** at least a lead-in section of the protection element (70) can be inserted into the press sleeve (40) together with the pipe end.

2. Connecting element in accordance with Claim 1, **characterized in that** the protection element (70) is inserted in the lead-in opening.

3. Connecting element in accordance with Claim 2, **characterized in that** the protection element is held with at least one holding section in the region of the lead-in opening.

4. Connecting element in accordance with Claim 2 and Claim 3, **characterized in that** the lead-in section is detachably attached to the fastening section, especially with the help of bridging materials that form predetermined break points.

5. Connecting element in accordance with any one of the preceding claims, **characterized in that** a stop (20) delimits the depth to which the pipe (50) can be inserted into the press sleeve (40).

6. Connecting element in accordance with any one of the preceding claims, **characterized in that** the connecting region (12) substantially has the form of a cylindrical sheath and is preferably formed integrally with the stop (20).

7. Connecting element in accordance with Claim 5 or Claim 6, **characterized in that** the press sleeve (40) can be detachably attached to the stop (20).

8. Connecting element in accordance with Claim 6 or Claim 7, **characterized in that** the lead-in opening (41) is formed in the manner of an annular gap (46) between the connecting region (12) and the press sleeve detachably attached to the stop (20).

9. Connecting element in accordance with Claim 8, **characterized in that** the protection element (70) is provided with a plastic ring that can be inserted in the lead-in opening.

10. Connecting element in accordance with any one of the preceding claims, **characterized in that** the press sleeve is provided with at least one control element, possibly a control opening, for checking the position of the pipe end received in it.

11. Connecting element in accordance with any one of Claims 6 to 10, **characterized by** a linkage element (30) being attachable to the stop (30) as well as to the press sleeve (40) and being preferably made at least partly of transparent material.

## Revendications

1. Élément de raccordement pour un système de conduites, lequel peut être couplé avec au moins un tube (50) du système de conduites, comprenant au moins un manchon à sertir (40) délimitant un orifice d'introduction (41) pour le tube (50) et servant à recevoir une extrémité du tube, une zone de raccordement (12) sur laquelle peut être enfilée l'extrémité du tube et au moins un élément de protection (70) empêchant la pénétration d'impuretés dans l'orifice d'introduction (41), **caractérisé en ce qu'**au moins une section d'introduction de l'élément de protection (70) peut être introduite dans le manchon à sertir (40) en même temps que l'extrémité du tube.

2. Élément de raccordement selon la revendication 1, **caractérisé en ce que** l'élément de protection (70) est logé dans l'orifice d'introduction (41).

3. Élément de raccordement selon la revendication 2, **caractérisé en ce que** l'élément de protection est maintenu par au moins une section de maintien dans la zone de l'orifice d'introduction.

4. Élément de raccordement selon les revendications 2 et 3, **caractérisé en ce que** la section d'introduction est fixée de manière amovible à la section de fixation, notamment à l'aide de ponts de matériau formant des points de rupture voulus.

5. Élément de raccordement selon l'une des revendications précédentes, **caractérisé par** une butée (20) qui délimite la profondeur d'introduction du tube (50) dans le manchon à sertir (40).

6. Élément de raccordement selon l'une des revendications précédentes, **caractérisé en ce que** la zone de raccordement (12) est à peu près en forme de chemise cylindrique circulaire et constituée de préférence d'une seule pièce avec la butée (20).

7. Élément de raccordement selon la revendication 5 ou 6, **caractérisé en ce que** le manchon à sertir (40) peut être fixé de manière amovible à la butée (20).

8. Élément de raccordement selon l'une des revendications 6 et 7, **caractérisé en ce que** l'orifice d'introduction (41) est réalisé sous la forme d'une fente annulaire (46) entre la zone de raccordement (12) et le manchon à sertir fixé de manière amovible à la butée (20).

9. Élément de raccordement selon la revendication 8, **caractérisé en ce que** l'élément de protection (70) présente une bague en matière plastique qui peut être logée dans l'orifice d'introduction.

10. Élément de raccordement selon l'une des revendications précédentes, **caractérisé en ce que** le manchon à sertir présente au moins un élément de contrôle comme un orifice de contrôle, par exemple, pour vérifier la position de l'extrémité du tube qui se trouve à l'intérieur de celui-ci.

11. Élément de raccordement selon l'une des revendications 6 à 10, **caractérisé par** un élément de liaison (30) pouvant être fixé à la butée (20) et en plus au manchon à sertir (40), lequel est réalisé de préférence au moins en partie dans un matériau transparent.
